# EUROPEAN PATENT APPLICATION

(11) **EP 4 520 783 A1**
(43) Date of publication of application: **12.03.2025**
(21) Application number: 22942797.6
(22) Date of filing: 16.05.2022
(51) Int. Cl.: C08L 1/02, C08L 101/00, C08J 3/22, H04R 7/02, B29C 45/00

(54) **CELLULOSE COMPOSITE PELLETS, DIAPHRAGM, AND ACOUSTIC SYSTEM**

(71) Applicant: LG Electronics Inc., Yeongdeungpo-gu Seoul 07336 (KR)
(72) Inventor: JEONG, Donghwan, Seoul 06772 (KR); PARK, Hyungwoo, Seoul 06772 (KR); JEONG, Daejin, Seoul 06772 (KR); CHA, Hyunseung, Seoul 06772 (KR); RYU, Jisung, Seoul 06772 (KR)
(74) Representative: Schornack, Oliver
(86) International application number: PCT/KR2022/006974
(87) International publication number: WO 2023/224133

(57) **Abstract**

A diaphragm is injection-molded using cellulose composite pellets, the cellulose composite pellets comprise at least one of a transparent cellulose material, a resin material, a light diffuser, a dispersant, and a pigment, and the transparent cellulose material is in 30wt% to 70wt%.

## Description

### Technical Field

An embodiment relates to cellulose composite pellets, a diaphragm, and an acoustic system.

### Background Art

An acoustic system is a system that converts an electrical signal into vibration of a diaphragm, generates a sound wave in the air, and radiates the sound wave.

Recently, omnidirectional acoustic systems that allow users to hear consistent sound regardless of locations thereof have attracted attention.

Conventional acoustic systems are provided with diaphragms that radiate sound waves in a specific direction, making it difficult to achieve omnidirectional sound.

To improve this, an acoustic system has been proposed which implements omnidirectional sound by placing a plurality of speaker units, each provided with a diaphragm that radiates a sound wave in a specific direction, at various locations. However, since the plurality of speaker units are required, there is a problem in that it is expensive and occupies a large area.

Meanwhile, eco-friendly products are attracting much attention worldwide as part of efforts to mitigate rapid climate change.

Accordingly, attempts have been made to implement a diaphragm of an acoustic system using a cellulose material. That is, after manufacturing a cellulose material in a film form, a diaphragm is manufactured using the film-type cellulose material. In such a case, when making a film in the shape of a cone so as to implement omnidirectionality, two ends of the film that are in contact with each other have to be connected to each other. Since the connecting portions at both ends of the film are not integrated, there occurs a defect in which sound is not properly radiated from the connecting portions, and there is also a problem in that it is not easy to connect the connecting portions.

In addition, conventional cellulose material-based diaphragms are made of opaque materials that do not transmit light, making it difficult to implement a mood function using a light source.

In particular, conventional cellulose material-based diaphragms still have the problem of not being able to implement omnidirectional sound because sound is radiated in a specific direction.

### Disclosure

### Technical Problem

An embodiment provides cellulose composite pellets having optical transparency.

An embodiment provides a diaphragm capable of implementing omnidirectional sound.

An embodiment provides an integral diaphragm.

An embodiment provides an eco-friendly diaphragm.

An embodiment provides a transparent diaphragm.

An embodiment provides an acoustic system including a diaphragm.

### Technical Solution

According to an aspect of an embodiment, a cellulose composite pellet includes a transparent cellulose material, a resin material, and an additive, wherein the transparent cellulose material is 30 wt% to 70 wt%.

The additive may include at least one of a light diffuser, a dispersant, or a pigment, the light diffuser may be 0.3 wt% to 1.2 wt%, and the dispersant may be 0.1 wt% or less.

The transparent cellulose material may be obtained from an opaque cellulose powder.

According to another aspect of an embodiment, a diaphragm is injection-molded by using a cellulose composite pellet, wherein the cellulose composite pellet includes at least one of a transparent cellulose material, a resin material, a light diffuser, a dispersant, or a pigment, and the transparent cellulose material is 30 wt% to 70 wt%.

The diaphragm may include: a first region having a first diameter; and a second region positioned on the first region and having a second diameter smaller than the first diameter, wherein a height of the diaphragm may be greater than the second diameter. The height of the diaphragm may be 1 to 1.5 times greater than the second diameter.

The first region may have a conical shape, and the second region may have a cylindrical shape.

The first diameter may decrease in an upper direction. A thickness of the second region may be greater than a thickness of the first region.

The first region may include: an inner circumferential surface having a first surface roughness; and an outer circumferential surface having a second surface roughness greater than the first surface roughness.

The first surface roughness may be 0.01 µm or less, and the second surface roughness may be 15 µm to 25 µm.

A partial region of the inner circumferential surface corresponding to a predetermined height from a lowest side of the first region may have a third surface roughness greater than the first surface roughness.

An upper surface of the second region may include a plurality of recesses disposed along a circumference thereof.

The diaphragm may have an elastic modulus of 1800 MPa to 2100 MPa. The diaphragm may have a transmittance of 30% to 90%. The diaphragm may radiate omnidirectional sound.

According to still another aspect of an embodiment, an acoustic system may include: the diaphragm; a voice coil part coupled to a second region of the diaphragm; and a magnetic field generating part on the voice coil part.

The acoustic system may include: a light source; and a guide part disposed on the light source and passing through the diaphragm.

### Advantageous Effects

An embodiment may obtain transparent cellulose composite pellets by including resin materials, additives, etc. based on a transparent cellulose material obtained by processing cellulose powder, instead of cellulose powder that does not transmit light.

An embodiment may obtain a diaphragm by injection-molding transparent cellulose composite pellets.

Since the diaphragm is integrally formed through injection molding, connection defects at connecting portions may be prevented and deterioration of sound radiation performance may be prevented when forming the diaphragm using a film.

By obtaining a diaphragm having a height greater than a diameter through injection molding, the omnidirectional sound radiation area may be expanded.

In an embodiment, the diaphragm has a light-transmitting characteristic, and thus, a mood function may be implemented together with a light source.

In an embodiment, the diaphragm may include a first region and a second region on the first region, wherein the first region may have a conical shape and the second region may have a cylindrical shape.

In this case, the first region is an omnidirectional sound radiation region and the omnidirectional sound radiation area may be expanded by making the height of the first region significantly larger than the height of the second region.

In addition, by making the second surface roughness of the outer circumferential surface of the first region greater than the first surface roughness of the inner circumferential surface of the first region, the separation between the outer circumferential surface of the diaphragm and the mold after injection molding may be facilitated.

In addition, since light from the light source is scattered by the outer circumferential surface of the first region, light is emitted uniformly, which may contribute to activating the mood function.

In addition, by making the thickness of the second region greater than the thickness of the first region, the coupling between the second region and the voice coil part may be made easier, and the breakage of the second region or the first region may be prevented when the second region and the voice coil part are coupled to each other.

In addition, by having the third surface roughness greater than the first surface roughness of the inner circumferential surface of the first area in a portion of the inner circumferential surface of the second region, the contact area between the corresponding partial region and the coupling member is expanded, thereby strengthening the coupling force.

In an embodiment, the diaphragm is formed based on cellulose extracted from trees, thereby enabling proactive response to the coming eco-friendly era and meeting the preferences of users who prefer eco-friendly products.

Meanwhile, in an embodiment, the voice coil part may be arranged along the circumference of the guide part and may be moved upward and downward by interference with the magnetic field of the magnetic field generating part. In this case, the guide part allows the voice coil part to move only in the vertical direction (Z direction) and prevents the voice coil part from moving in the horizontal direction (X direction or Y direction) and prevents the voice coil part from being tilted, so that the vibration of the voice coil part is uniformly provided to the diaphragm and uniform sound may be radiated omnidirectionally from the diaphragm.

### Brief Description of Drawings

FIG. 1 is a cross-sectional view illustrating an acoustic system according to an embodiment.
FIG. 2 illustrates a state where light from a light source is emitted through a diaphragm in an acoustic system according to an embodiment.
FIG. 3 is a perspective view illustrating the diaphragm of FIG. 1.
FIG. 4 is a cross-sectional view illustrating the diaphragm of FIG. 1.
FIG. 5 illustrates an injection molding apparatus according to an embodiment.
FIG. 6 illustrates an upper mold frame of FIG. 5.
FIG. 7 illustrates a lower mold frame of FIG. 6.
FIG. 8 illustrates a state where a diaphragm is formed using a molded article supply device of an embodiment.
FIG. 9 illustrates a process for forming cellulose composite pellets according to an embodiment.
FIGS. 10a to 10c illustrate a diaphragm formed of a PC.
FIGS. 11a to 11c illustrate a diaphragm formed of an ABS.
FIGS. 12a to 12c illustrate a diaphragm formed of a PET.
FIGS. 13a to 13c illustrate a diaphragm formed of a PP.
FIGS. 14a to 14c illustrate a diaphragm formed of a PC.
FIGS. 15a and 15b illustrate a diaphragm according to an embodiment.
FIGS. 16a to 16d illustrate diaphragms having different transmittances according to an embodiment.

### Mode for Invention

Hereinafter, embodiments disclosed in the present specification will be described in detail with reference to the accompanying drawings. The same or similar elements are denoted by the same reference numerals, regardless of the reference numerals, and redundant descriptions thereof are omitted. The suffixes 'module' and 'unit' for components used in the description below are assigned or mixed in consideration of easiness in writing the specification and do not have distinctive meanings or roles by themselves. Additionally, the accompanying drawings are used to understanding embodiments disclosed herein but the technical idea of the present disclosure is not limited thereto. In addition, when an element such as a layer, a region, or a substrate is referred to as being 'on' another element, it will be understood that the element may be directly on the other element, or intervening elements may be present therebetween.

Meanwhile, in the following description, a first side is a region positioned in a first direction, and a second side is a region positioned in a second direction. For example, the first side may be an upper side and the second side may be a lower side, but the present disclosure is not limited thereto. The first direction and the second direction may be opposite to each other, but the present disclosure is not limited.

A acoustic system described in the present specification may be applied to a TV, a signage, a mobile phone, a smart phone, a head-up display (HUD) for a car, a backlight unit for a laptop computer, a display itself for virtual reality (VR) or augmented reality (AR), or an audio output device connected thereto, such as a speaker.

Cellulose composite pellets, a diaphragm, and an acoustic system according to embodiments will be described below.

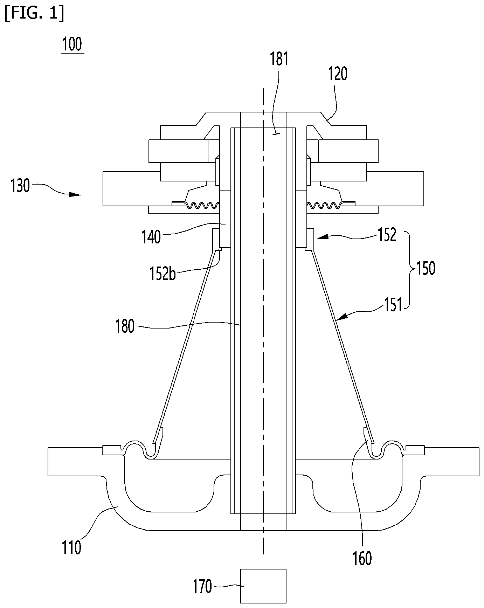

FIG. 1 is a cross-sectional view illustrating an acoustic system according to an embodiment.

Referring to FIG. 1, an acoustic system 100 according to an embodiment may include a magnetic field generating part 130, a voice coil part 140, and a diaphragm 150. A sound generating part may be constituted by the voice coil part 140 and the diaphragm 150.

Although not shown, the magnetic field generating part 130 may include a plate, a magnet, a yoke, etc. A magnetic field (hereinafter referred to as a second magnetic field) may be generated by the plate, the magnet, and the yoke. A voice coil may be vibrated by the magnetic field generated in this manner.

Although not shown, the voice coil may include a bobbin forming a body, a multi-turn coil provided on the bobbin, etc. A magnetic field (hereinafter referred to as a first magnetic field) may be generated by a current flowing through the coil. The first magnetic field generated in this manner may interfere with the second magnetic field, causing the bobbin, i.e., the voice coil part 140, to vibrate and generate sound.

The magnetic field generating part 130, the voice coil part 140, and the diaphragm 150 may be directly or indirectly coupled to and fixedly supported to a support 110 and a cap part 120. The cap part 120 may be referred to as a case, a protective member, a fixing member, etc.

Specifically, the magnetic field generating part 130 may be coupled to the cap part 120.

The voice coil part 140 may be disposed below the magnetic field generating part 130.

The first side of the diaphragm 150 may be coupled to the voice coil part 140, and the second side of the diaphragm 150 may be coupled to the support 110.

The second side of the diaphragm 150 may be coupled to the support 110 by using a coupling member 160. The coupling member 160 may be formed of an elastic material, such as rubber, and may minimize vibration attenuation of the diaphragm 150 so as to generate high-quality sound. For example, the coupling member 160 may have a shape having at least one bend, thereby maximizing the vibration attenuation of the diaphragm 150.

Meanwhile, the acoustic system 100 according to an embodiment may include a light source 170 and a guide part 180.

The acoustic system 100 according to an embodiment may provide not only a sound generating function but also a mood function.

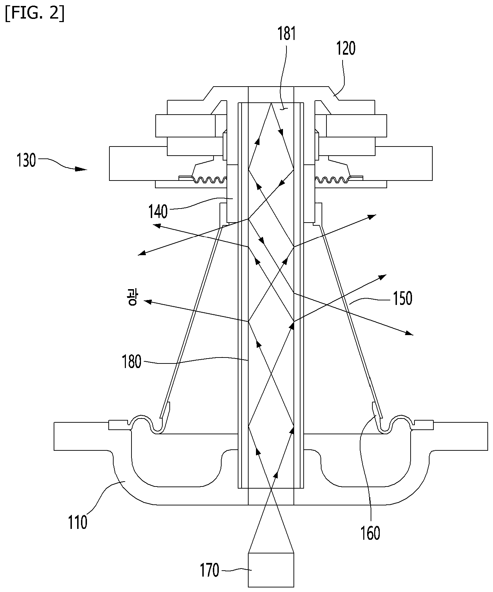

As shown in FIG. 2, light from the light source 170 may be guided through the guide part 180 and then transmitted through the guide part 180. In this manner, light having passed through the guide part 180 may be transmitted through the diaphragm 150 and emitted to the outside.

To this end, the guide part 180 may include a through hole 181 with an empty interior. After the light from the light source 170 travels through the through hole 181 of the guide part 180, the light may be transmitted through the guide part 180 and transferred to the diaphragm 150. Thereafter, the light may be transmitted through the diaphragm 150 and emitted to the outside.

As an example, the intensity of light, or brightness, may vary depending on the intensity of sound output. Accordingly, light having an intensity that varies depending on the intensity of the sound may be emitted to the outside through the guide part 180 and the diaphragm 150.

As another example, a plurality of light sources 170 emitting different color lights may be provided. In this case, different color lights may be emitted from the plurality of light sources 170 depending on the output intensity of sound. Accordingly, various color lights may be emitted to the outside through the guide part 180 and the diaphragm 150 according to the intensity of sound.

The first side of the guide part 180 may be coupled to the cap part 120. The second side of the guide part 180 may pass through the support 110 and may be coupled to the support 110, but the present disclosure is not limited thereto.

Although not shown, the guide part 180 may be formed to extend from the support 110 to the location of the light source 170.

As another example, a reflector (not shown) may be provided around the second side of the light source 170. The reflector may be positioned so that light from the light source 170 is reflected toward the guide part 180. Accordingly, since most of the light emitted from the light source 170 travels to the guide part 180 by the reflector, light loss may be minimized.

Meanwhile, the guide part 180 may pass through the magnetic field generating part 130. That is, the guide part 180 may pass through the plate, the magnet, the yoke, etc. of the magnetic field generating part 130. In other words, the plate, the magnet, the yoke, etc. may be disposed to surround the outer circumferential surface of the guide part 180.

The guide part 180 may pass through the voice coil part 140. That is, the guide part 180 may pass through the bobbin, the multi-turn coil, etc. of the voice coil part 140. For example, the bobbin may be disposed to surround the outer circumferential surface of the guide part 180. In this case, the coil may be wound a plurality of times along the outer circumferential surface of the bobbin.

As described above, the voice coil part 140 may vibrate due to interference with the magnetic field of the magnetic field generating part 130. The degree of vibration may be determined by the intensity of the current flowing through the coil of the voice coil part 140. For example, as the current flowing through the coil increases, the intensity of vibration generated from the voice coil may increase.

Although the voice coil part 140 is shown as being in contact with the magnetic field generating part 130, the voice coil part 140 may be spatially separated from the magnetic field generating part 130 in an actual product.

For example, the voice coil part 140 may be moved in a vertical direction according to the vibration occurring in the voice coil part 140. At this time, the inner circumferential surface of the bobbin of the voice coil part 140 may be spaced apart from the outer circumferential surface of the guide part 180 so that the vertical movement of the voice coil part 140 is not hindered by the guide part 180.

The voice coil part 140 may be guided by the guide part 180 and moved in the vertical direction. Accordingly, the guide part 180 allows the voice coil part 140 to move only in the vertical direction (Z direction) and prevents the voice coil part 140 from moving in the horizontal direction (X direction or Y direction) and prevents the voice coil part 140 from being tilted, so that the vibration of the voice coil part 140 is uniformly provided to the diaphragm 150 and uniform sound may be radiated omnidirectionally from the diaphragm 150.

As described above, since the voice coil part 140 is coupled to the first side of the diaphragm 150, the vibration of the voice coil part 140 is transferred to the diaphragm 150 as it is, so that sound may be radiated to the outside by the vibration of the diaphragm 150.

According to an embodiment, the diaphragm 150 may radiate omnidirectional sound.

In order to form a diaphragm having an omnidirectional sound radiation structure, a film is bent into a certain shape, and then, the connecting portions where the bends meet have to be coupled to each other. When coupling the connecting portions by using a physical coupling means, the connecting portions may not come into contact with each other, which may result in a decrease in sound radiation performance at the connecting portion and causing a defect in the diaphragm 150. Even if the connecting portions are coupled to each other by using an adhesive, the connecting portions do not come into contact with each other, causing the defect of the diaphragm.

However, in an embodiment, since the diaphragm 150 having the omnidirectional sound radiation structure is integrally formed by injection molding, the connecting portions as in the related art do not exist, and thus, defects in the diaphragm 150 as in the related art do not occur.

Meanwhile, injection molding may be formed by injecting a molded article into a mold and cooling the molded article.

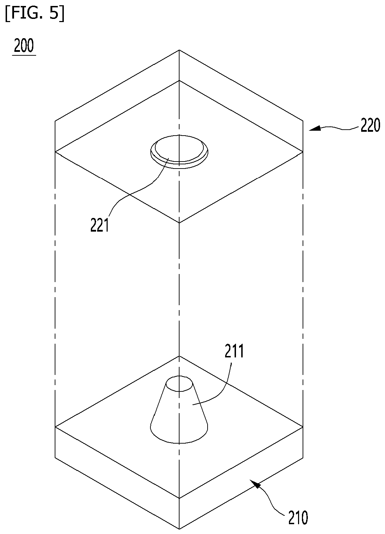

An injection molding apparatus according to an embodiment is described with reference to FIGS. 5 to 7.

FIG. 5 illustrates an injection molding apparatus according to an embodiment.

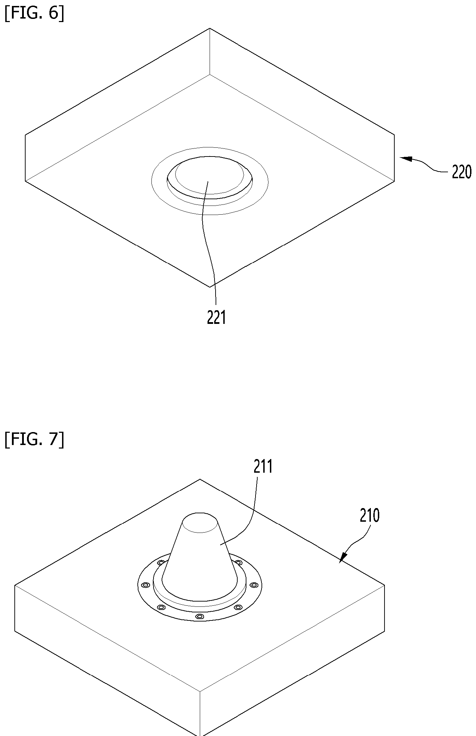

FIG. 6 illustrates an upper mold frame of FIG. 5. FIG. 7 illustrates a lower mold frame of FIG. 6.

Referring to FIGS. 5 to 7, an injection molding apparatus 200 according to an embodiment may include a first mold frame 210 and a second mold frame 220.

A first mold 211 may be disposed on the first mold frame 210 and a second mold 221 may be disposed on the second mold frame 220.

The first mold 211 may have a convex shape protruding upward from the upper surface of the first mold frame 210. The second mold 221 may have a concave shape recessed from the lower surface of the second mold frame 220.

The first mold frame 210 and/or the second mold frame 220 may be moved in the vertical direction. For example, the first mold frame 210 may be fixed and the second mold frame 220 may be moved in the vertical direction. For example, the second mold frame 220 may be fixed and the first mold frame 210 may be moved in the vertical direction. For example, the first mold frame 210 and the second mold frame 220 may move in opposite directions along the vertical direction. That is, when the first mold frame 210 is moved upward, the second mold frame 220 may be moved downward.

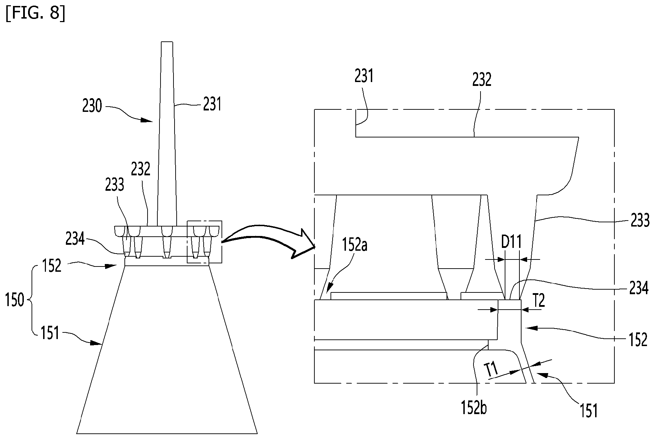

The first mold frame 211 may be inserted into the second mold frame 221 by the vertical movement of the first mold frame 210 and/or the second mold frame 220. At this time, a predetermined gap may be maintained between the first mold 211 and the second mold 221. Here, the gap may be a space where the diaphragm 150 is formed by injection molding. The molded article may be injected into the gap through the molded article supply device 230 as shown in FIG. 8 and then cooled to form the diaphragm 150.

For convenience of explanation, the first mold 211 and the second mold 221 shown in FIGS. 5 to 7 are not shown in FIG. 8, but the process of manufacturing the diaphragm 150 may be easily understood from FIGS. 5 to 7. For example, the diaphragm 150 shown in FIG. 8 may be formed in the gap defined by the first mold 211 and the second mold 221 shown in FIGS. 5 to 7. At this time, the molded article supply device 230 may be installed above the first mold 211 in the first mold frame 210.

After the diaphragm 150 is formed, the diaphragm 150 may be separated from the first mold or the second mold 221 by the vertical movement of the first mold frame 210 and/or the second mold frame 220. An air spray process may be performed before the separation process so as to facilitate separation. By injecting air between the diaphragm 150 and the first mold 211 or the second mold 221, the diaphragm 150 may be separated more easily from the first mold 211 or the second mold 221.

Meanwhile, the molded article may be, for example, a liquefied form of melted cellulose composite pellets. The cellulose composite pellets may include at least one of a transparent cellulose material, a resin material, a light diffuser, a dispersant, or a pigment. The transparent cellulose material may be 30 wt% to 70 wt%.

In an embodiment, the cellulose composite pellets may be formed by mixing not only a cellulose material but also a resin material, an additive, etc. The additive may include at least one of a light diffuser, a dispersant, or a pigment. For example, the light diffuser may be 0.3 wt% to 1.2 wt% and the dispersant may be 0.1 wt% or less.

In particular, in an embodiment, the cellulose material may have a transparent characteristic.

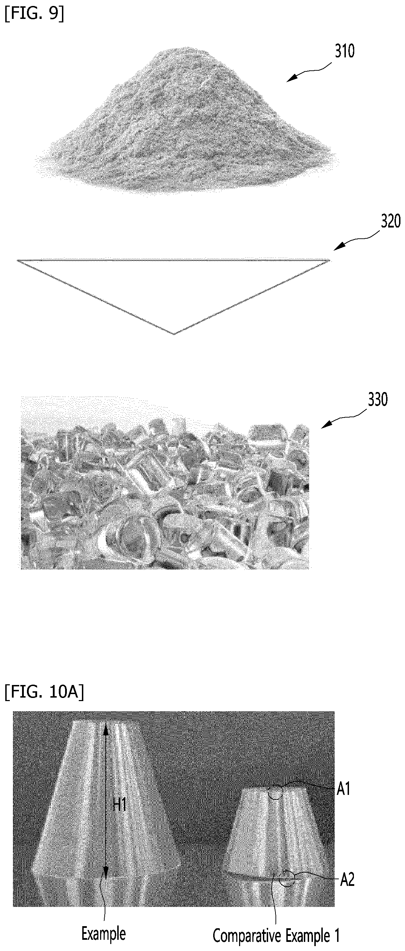

As shown in FIG. 9, after separating cellulose from plants such as trees, a cellulose powder 310 in powder form may be obtained through an additional process. At this time, the cellulose powder 310 is usually brown and has an opaque characteristic that does not allow light to be transmitted. Therefore, when the diaphragm 150 of the embodiment is formed by using the cellulose powder 310, the diaphragm 150 also has an opaque characteristic, and thus, the mood function desired in the embodiment cannot be realized.

Accordingly, in an embodiment, a transparent cellulose material (EASTMAN COMPANY) made by processing the cellulose powder 310 was used. The transmittance of the transparent cellulose material may be about 90%.

In an embodiment, as shown in FIG. 9, by mixing and processing the transparent resin material and the additive 320 into the cellulose material having a transmittance of 90%, cellulose composite pellets 330 having a transmittance of 90% or less may be obtained.

In the following description, the cellulose composite pellets may be the cellulose composite pellets 330 shown in FIG. 9.

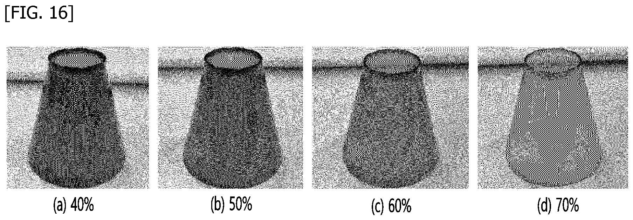

As shown in FIGS. 16a to 16d, the diaphragm 150 having various transmittances may be obtained by mixing the cellulose material having a transmittance of 90% with the transparent resin material and the additive 320.

That is, as the additive 320, the transmittance may vary depending on the specific gravity (wt%) of the pigment. The pigment is, for example, a black pigment. As the specific gravity (wt%) of the black pigment increases, the transmittance of the manufactured diaphragm 150 may decrease. For example, when the diaphragm 150 does not include black pigment, the diaphragm 150 having a transmittance of about 90% may be manufactured. For example, as the specific gravity (wt%) of the black pigment increases, the transmittance of the diaphragm 150 may be less than 90%.

Accordingly, a diaphragm having a transmittance of 40% (FIG. 16a), a diaphragm having a transmittance of 50% (FIG. 16b), a diaphragm having a transmittance of 60% (FIG. 16c), and a diaphragm having a transmittance of 70% (FIG. 16d) may be separately manufactured depending on the specific gravity (wt%) of the pigment.

For example, the diaphragm 150 of the embodiment may have a transmittance of 30% to 90%. The diaphragm having a transmittance of 90% or more is impossible to manufacture due to the use of various mixed materials. For transmittances less than 30%, the black pigment needs to be added in an larger amount (wt%), but this may result in flash defects, molding defects, or bubbles. Preferably, the diaphragm of the embodiment may have a transmittance of 40% to 70%.

Meanwhile, the diaphragm 150 of the embodiment may be manufactured by using the molded article in which the cellulose composite pellets 330 are melted and liquefied in the injection molding apparatus 200 shown in FIG. 5.

In this case, since the molded article is liquid, various conditions such as the degree of the molded article, molding temperature, and molding pressure have to be optimized for the flow of the molded article so as to produce the molded product without defects.

The present applicant made the diaphragm 150 having an omnidirectional radiation structure using various resins. That is, as the resin, polycarbonate (PC: manufactured by COVESTRO of Germany, hereinafter referred to as PC1), acrylonitrile butadiene styrene (ABS), polyethylene terephthalate (PET), polypropylene (PP), PC (manufactured by Samyang Corporation of Korea, hereinafter referred to as PC2), and the like were used.

The diaphragms manufactured using PC1, ABS, PET, PP, and PC2 did not include the transparent cellulose material of the embodiment.

### [Diaphragm manufactured using PC1]

As shown in FIG. 10a, the diaphragm (Comparative Example 1) manufactured using PC1 is non-molded and is smaller than the height H1 of the diaphragm 150 of Example, making it difficult to implement an omnidirectional diaphragm. That is, in order to implement the omnidirectional diaphragm, as the height of the diaphragm increases, the sound radiation area and radiation direction increases, thereby ensuring more perfect omnidirectionality. However, as shown in FIG. 10a, the height of the diaphragm (Comparative Example 1) manufactured using PC1 is only about half the height H1 of the diaphragm 150 of Example, making it difficult to ensure perfect omnidirectionality.

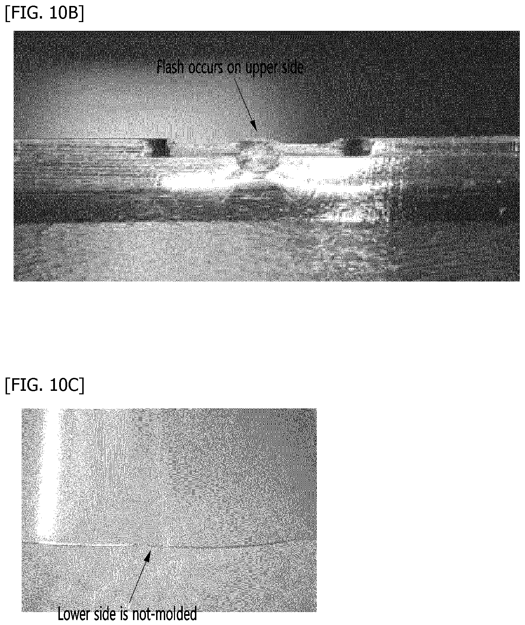

In addition, FIG. 10b illustrates a region A1 of FIG. 10a and it may be seen that a flash defect occurred on the first side of the diaphragm. In addition, FIG. 10c illustrates a region A2 of FIG. 10a and it may be seen that the second side of the diaphragm was non-molded and a molding deformation occurred.

### [Diaphragm manufactured using ABS]

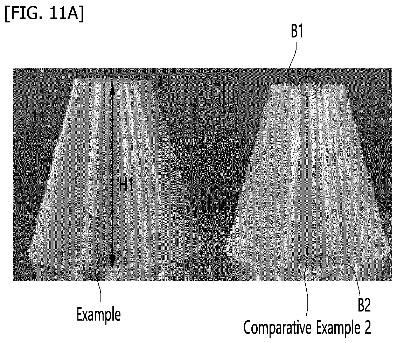

As shown in FIG. 11a, the diaphragm (Comparative Example 2) manufactured using ABS does not significantly differ from the diaphragm 150 of Example in appearance, but defects occurred when a region B1 and a region B2 are enlarged.

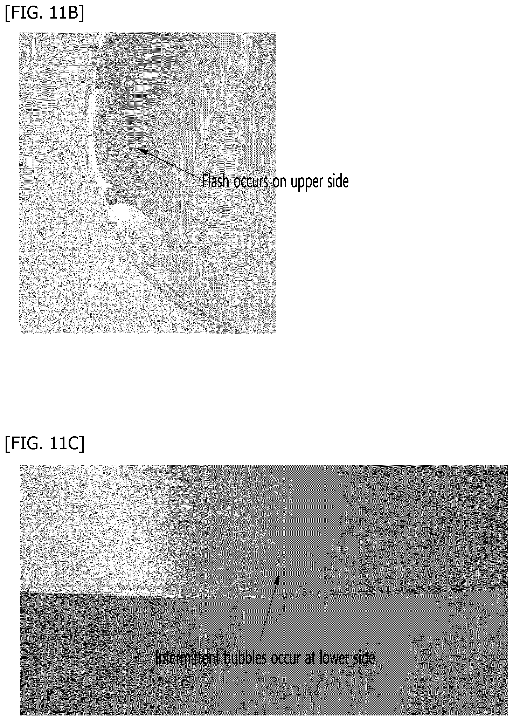

In addition, FIG. 11b illustrates the region B1 of FIG. 11a and it may be seen that a flash defect occurred on the first side of the diaphragm. In addition, FIG. 11c illustrates the region B2 of FIG. 11a and it may be seen that bubbles were generated on the outer circumferential surface of the second side of the diaphragm.

### [Diaphragm manufactured using PET]

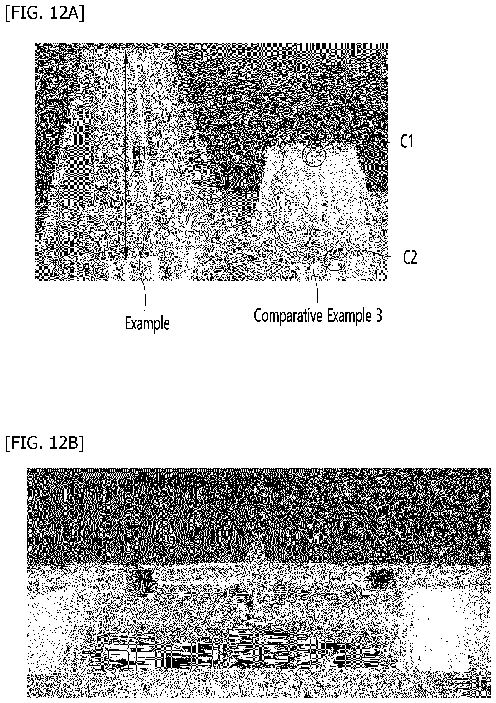

As shown in FIG. 12a, the diaphragm (Comparative Example 3) manufactured using PET is non-molded and is smaller than the height H1 of the diaphragm 150 of Example, making it difficult to implement an omnidirectional diaphragm. That is, since the height of the diaphragm (Comparative Example 3) manufactured using PET is only about half the height H1 of the diaphragm 150 of Example, it is difficult to ensure perfect omnidirectionality.

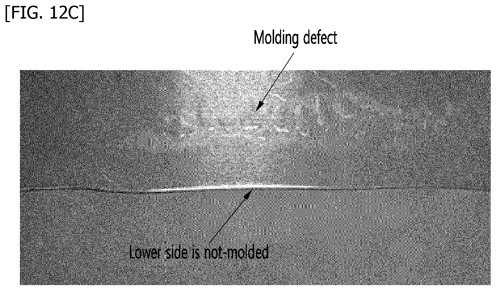

In addition, FIG. 12b illustrates a region C1 of FIG. 12a and it may be seen that a relatively large flash defect occurred on the first side of the diaphragm. In addition, FIG. 12c illustrates a region C2 of FIG. 12a and it may be seen that the second side of the diaphragm was non-molded and a molding defect occurred on the outer circumferential surface.

### [Diaphragm manufactured using PP]

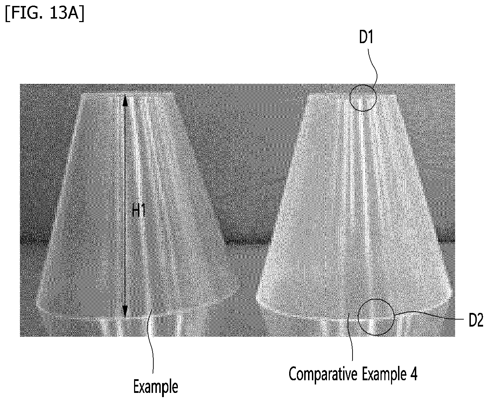

As shown in FIG. 13a, the diaphragm (Comparative Example 4) manufactured using PP does not significantly differ from the diaphragm 150 of Example in appearance, but defects occurred when a region D1 is enlarged.

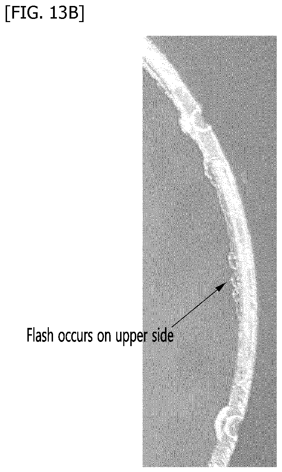

In addition, FIG. 13b illustrates the region D1 of FIG. 13a and it may be seen that a flash defect occurred on the first side of the diaphragm.

### [Diaphragm manufactured using PC2]

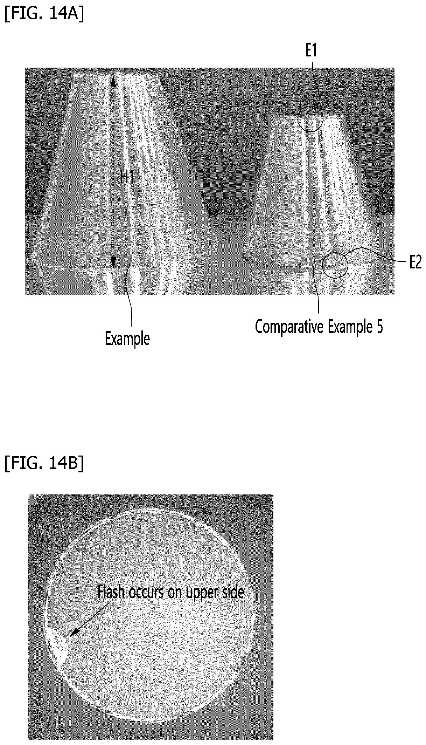

As shown in FIG. 14a, the diaphragm (Comparative Example 5) manufactured using PC2 is non-molded and is smaller than the height H1 of the diaphragm 150 of Example, making it difficult to implement an omnidirectional diaphragm. That is, since the height of the diaphragm (Comparative Example 3) manufactured using PET is only about 2/3 of the height H1 of the diaphragm 150 of Example, it is difficult to ensure perfect omnidirectionality.

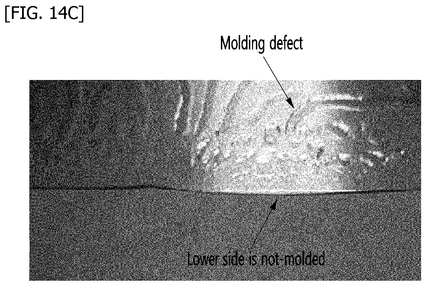

In addition, FIG. 14b illustrates a region E1 of FIG. 14a and it may be seen that a relatively large flash defect occurred on the first side of the diaphragm. In addition, FIG. 14c illustrates a region E2 of FIG. 14a and it may be seen that the second side of the diaphragm was non-molded and a molding defect was severe on the outer circumferential surface.

### [Diaphragm according to Example]

Meanwhile, the applicant manufactured a diaphragm using the cellulose composite pellets 330 according to Example in the injection molding apparatus 200 shown in FIGS. 5 to 7.

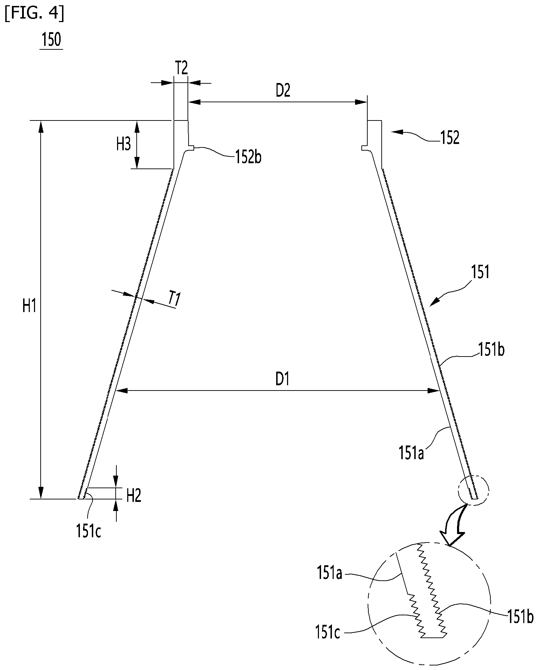

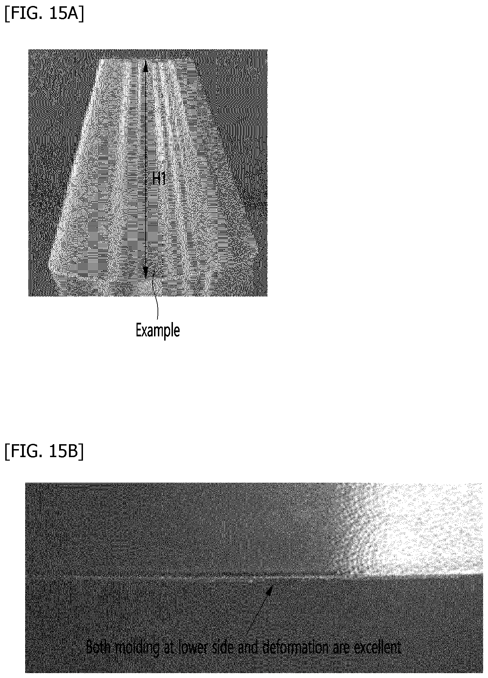

As shown in FIG. 15a, it may be seen that the diaphragm 150 having a height H1 capable of perfectly realizing omnidirectionality was manufactured. That is, according to Example, as shown in FIG. 4, the height H1 of the diaphragm 150 may be greater than a second diameter D2 of a second region 152. For example, the height H1 of the diaphragm 150 may be 1 to 1.5 times greater than the second diameter D2 of the second region 152.

FIG. 15b illustrates a region F in FIG. 15a and it may be seen that the molding of the second side of the diaphragm 150 was good.

Accordingly, according to Example, it is possible to manufacture the diaphragm 150 having the height H1 greater than the second diameter D2 of the second region 152 without causing flash defects, molding defects, or bubbles, thereby enabling more perfect omnidirectional sound to be implemented by mounting the diaphragm 150 on the acoustic system 100.

Comparative Examples 1 to 5 and Example may be summarized in Table 1.

**[Table 1]**

| No. | Material | Defect state | |
|---|---|---|---|
| | | First side of diaphragm | Second side of diaphragm |
| Comparative Example 1 | PC1 | Flash defect | Occurrence of non-molding |
| Comparative Example 2 | ABS | Occurrence of flash | Occurrence of bubbles |
| Comparative Example 3 | PET | Occurrence of excessive flash | Occurrence of non-molding and molding defect |
| Comparative Example 4 | PP | Occurrence of flash | N/A |
| Comparative Example 5 | PC2 | Occurrence of excessive flash | Occurrence of non-molding and molding defect |
| Example | Cellulose composite pellets | N/A | Both molding and deformation are excellent |

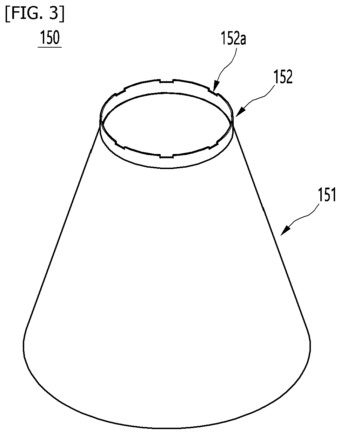

Meanwhile, FIG. 3 is a perspective view illustrating the diaphragm of FIG. 1. FIG. 4 is a cross-sectional view illustrating the diaphragm of FIG. 1.

Referring to FIGS. 3 and 4, the diaphragm 150 according to an embodiment may include a first region 151 and a second region 152 positioned on the first region 151.

The first region 151 and the second region 152 may be integrally formed. For example, since the diaphragm 150 is formed by injection molding, the first region 151 and the second region 152 may be integrally formed. Accordingly, the diaphragm 150 of the embodiment may solve a conventional problem that, when forming a diaphragm using a film, sound is not properly radiated due to a defect that occurs when connecting two ends of a film that are in contact with each other. In addition, the diaphragm 150 of the embodiment may also solve a conventional problem that, when forming a diaphragm using a film, it is difficult to connect the corresponding connecting portions.

For example, the first region 151 may have a conical shape and the second region 152 may have a cylindrical shape. In this case, the first diameter D1 of the first region 151 may gradually decrease along the upper direction and the second diameter D2 of the second region 152 may be constant along the upper direction. At this time, the first diameter D1 of the first region 151 may be greater than the second diameter D2 of the second region 152.

For example, the inclination angle of the side with respect to the first side of the first region 151 may be 45° or less. In this manner, the side inclination angle of the first region 151 with respect to the first side is set to 45° or less. Accordingly, a larger height H1 in the vertical direction (Z-axis direction) is achieved with a smaller size, thereby expanding the omnidirectional sound radiation area and ensuring more perfect omnidirectionality.

The first region 151 is a region that radiates sound. Since the maximum area has to be ensured, the area of the first region 151 may be at least 90% greater than the area of the second region 152. For example, the height H3 of the second region 152 may be less than or equal to 10% than the height H1 of the diaphragm 150.

The second region 152 is a region that is coupled to the voice coil part 140, as shown in FIG. 1, and may be formed in a cylindrical shape for ease of coupling to the voice coil part 140.

For example, the inner circumferential surface of the second region 152 of the diaphragm 150 and the outer circumferential surface of the bobbin of the voice coil part 140 may be bonded using, for example, an adhesive, but the present disclosure is not limited thereto.

Meanwhile, a protrusion 152b may be formed on the second side of the inner circumferential surface of the second region 152. For example, the protrusion 152b may be formed along the circumferential of the second side of the inner circumferential surface of the second region 152. The protrusion 152b is integrally formed with the second region 152 and may be formed together when the diaphragm 150 is formed by injection molding. The protrusion 152b is optional and may be omitted.

When the voice coil part 140 is coupled to the diaphragm 150, the second side of the bobbin of the voice coil part 140 may come into contact with the protrusion 152b. At this time, the second side of the bobbin and the protrusion 152b may be bonded with an adhesive, but the present disclosure is not limited thereto.

Even if an adhesion defect occurs between the voice coil part 140 and the inner circumferential surface of the second region 152 of the diaphragm 150 due to the protrusion 152b, the second side of the voice coil part 140, i.e., the second side of the bobbin, is still bonded to the protrusion 152b, so that an adhesion defect between the voice coil part 140 and the diaphragm 150 may be prevented.

In addition, since the second side of the voice coil part 140 is coupled to the protrusion 152b of the diaphragm 150, the vertical vibration of the voice coil part 140 is directly transferred to the diaphragm 150, and thus, the diaphragm 150 may generate high-quality sound.

Meanwhile, a thickness T2 of the second region 152 may be greater than a thickness T1 of the first region 151.

Referring to FIGS. 5 to 7, the cellulose composite pellets 330 are melted and liquefied through the molded article supply device 230 and then injected into a gap between the first mold 211 and the second mold 221 of an injection molding apparatus 200 and cooled to form the diaphragm 150.

The injection molding apparatus 200 may include a first supply part 231, a distribution part 232, and a plurality of second supply parts 233. The first supply part 231 and the second supply part 233 may be referred to as sprues.

Although not shown, the cellulose composite pellets 330 may be melted by a heating process to form a liquefied molded article. The liquefied molded article may be injected into the gap between the first mold 211 and the second mold 221 of the injection molding apparatus 200 through the first supply part 231, the distribution part 232, and the plurality of second supply parts 233.

The distribution part 232 may distribute the molded article of the first supply part 231 to the plurality of second supply parts 233 that are uniform.

The plurality of second supply parts 233 may be disposed, for example, in a circular shape. Accordingly, since the molded article is injected into the gap between the first mold 211 and the second mold 221 of the injection molding apparatus 200 from the plurality of second supply parts 233 disposed in a circular shape, the meeting point or the flow within the gap is uniform, and thus, flash defects or molding defects do not occur and bubbles do not occur.

The thickness T2 of the second region 152 of the diaphragm 150 may be greater than a diameter D11 of a gate 234 located at the end of each of the plurality of second supply parts 233. Since the molded article is clumped together near the gate 234 of each of the plurality of second supply parts 233 and then slowly flows down in the second lateral direction, the thickness T2 of the second region 152 of the diaphragm 150 may be relatively thick and the thickness T1 of the first region 151 may be relatively thin.

Meanwhile, as described above, the second region 152 of the diaphragm is the region where the voice coil part 140 is coupled, and during the coupling process, damage such as the breakage may occur in the second region 152 due to physical pressure or impact, and the breakage may spread to the first region 151, resulting in defects in the diaphragm 150.

However, by making the thickness T2 of the second region 152 of the diaphragm 150 greater than the thickness T1 of the first region 151, the breakage of the second region 152 may be prevented during the coupling process between the diaphragm 150 and the voice coil part 140, thereby preventing defects in the diaphragm 150.

For example, the thickness T1 of the first region 151 may be 0.4 mm or less, but the present disclosure is not limited thereto. The diaphragm 150 including the first region 151 having the thickness T1 of 0.4 mm or less may be manufactured using the injection molding apparatus 200 shown in FIGS. 5 to 7.

In this manner, by forming the thickness T1 of the first region 151 that generates substantially omnidirectional sound as thin as possible, the diaphragm 150 vibrates in response to the vibration of the voice coil part 140, thereby realizing high-quality sound.

Meanwhile, the upper surface of the diaphragm 150 may include a plurality of recesses 152a disposed along the circumference thereof.

As shown in FIG. 8, the plurality of recesses 152a may be formed in a region where the gate 234 of each of the plurality of second supply parts 233 is positioned.

Although not shown, the gate 234 of each of the plurality of second supply parts 233 may be positioned within the gap formed by the first mold 211 and the second mold 221 shown in FIGS. 5 to 7. In this case, when the molded article is injected into the gap through the gate 234 of each of the plurality of second supply parts 233 to fill the entire gap, a portion of the molded article may also fill the gap between the gates 234 of the plurality of second supply parts 233 and then the diaphragm 150 may be formed through a cooling process. The molded article supply device 230 may be installed in the second mold frame 220. For example, the molded article supply device 230 may be installed on the second mold 221, but the present disclosure is not limited thereto. Thereafter, when the second mold frame 220 is moved upward, the plurality of second supply parts 233 may also be moved upward. Accordingly, since the molded article is not filled in the region where the gate 234 of each of the original plurality of second supply parts 233 is positioned, the region where the gate 234 is positioned may be formed as the recess 152a.

Since the gate 234 of each of the plurality of second supply parts 233 is positioned within the gap formed by the first mold 211 and the second mold 221, flash defects may be prevented or minimized. In a case where the gate 234 of each of the plurality of second supply parts 233 is positioned at the uppermost side of the gap, when the diaphragm 150 is formed by injection molding and the plurality of second supply parts 233 are also moved upward, flash defects protruding upward from the first side of the diaphragm 150 occurs, and the protruding flash defects may cause other defects during the post-processing or may act as a factor in breaking the diaphragm 150.

Accordingly, since the gate 234 of each of the plurality of second supply parts 233 is positioned within the gap formed by the first mold 211 and the second mold 221 shown in FIGS. 5 to 7, the recess 152a is formed on the first side of the diaphragm 150, thereby preventing flash defects protruding upward.

Meanwhile, in an embodiment, the diaphragm 150 may include an inner circumferential surface 151a and an outer circumferential surface 151b.

In this case, surface roughness Ra1 of the inner circumferential surface 151a and surface roughness Ra2 of the outer circumferential surface 151b may be different from each other. For example, the second surface roughness Ra2 of the outer circumferential surface 151b may be greater than the first surface roughness Ra1 of the inner circumferential surface 151a. For example, the first surface roughness Ra1 may be 0.01 µm and may be a mirror surface. For example, the second surface roughness Ra2 may be 15 µm to 25 µm, which may be a very rough surface compared to the first surface roughness Ra1.

In this manner, the second surface roughness Ra2 of the outer circumferential surface 151b is made larger than the first surface roughness Ra1 of the inner circumferential surface 151a, so that the diaphragm 150 may be separated well after the diaphragm 150 is formed by injection molding.

As shown in FIGS. 5 to 7, the first mold frame 210 and/or the second mold frame 220 are moved in the vertical direction to maintain a predetermined gap, and then the liquefied molded article of the cellulose composite pellets 330 is injected and cooled to form the diaphragm 150. Thereafter, as the second mold frame 220 is moved upward, the outer circumferential surface 151b of the diaphragm 150 may be separated from the second mold 221 of the second mold frame 220. At this time, if the outer circumferential surface 151b of the diaphragm 150 is a mirror surface, the second mold 221 and the outer circumferential surface 151b of the diaphragm 150 are not separated well due to the surface tension between the outer circumferential surface 151b of the diaphragm 150 and the second mold 221, and if the second mold 220 is forcibly moved upward, the diaphragm 150 may break.

Accordingly, since the inner surface of the second mold 221 of the second mold frame 220 has a shape having the second surface roughness Ra2, the outer circumferential surface 151b of the first region 151 of the diaphragm 150 may have the second surface roughness Ra2. Since the outer circumferential surface 151b of the first region 151 has the second surface roughness Ra2, the outer circumferential surface 151b of the first region 151 may be separated well from the second mold 221 without breaking the diaphragm 150.

In addition, since the outer circumferential surface 151b of the first region 151 has the second surface roughness Ra2 greater than the first surface roughness Ra1 of the inner circumferential surface 151a, light transmitted from the guide part 180 is scattered at the outer circumferential surface 151b of the first region 151 and light is emitted more uniformly, which may contribute to the activation of the mood function.

Meanwhile, a part of the inner circumferential surface 151a corresponding to a predetermined height H2 at the lowest side of the first region 151 of the diaphragm 150 may have a third surface roughness Ra3 greater than the first surface roughness. For example, the third surface roughness Ra3 may be similar to or identical to the second surface roughness Ra2.

Here, a partial region 151c may be a region coupled by the coupling member 160, as shown in FIG. 1. That is, the partial region 151c of the first region 151 of the diaphragm 150 may be in surface contact with the coupling member 160. For example, one side of the coupling member 160 may be attached to the partial region 151c of the first region 151 of the diaphragm 150 by using an adhesive. The other side of the coupling member 160 may be coupled to the support 110. For example, the other side of the coupling member 160 may be coupled to the support 110 by using a coupling means such as an adhesive or a screw.

According to an embodiment, the partial region 151c of the first region 151 of the diaphragm 150 has the third surface roughness greater than the first surface roughness, and thus, the contact area with the coupling member 160 is expanded, thereby enhancing the coupling force.

Meanwhile, as the elastic modulus of the diaphragm decreases, the output transmission rate significantly decreases. Therefore, there is a problem of increased power consumption because a higher current has to flow so as to obtain the desired output.

However, by forming the diaphragm 150 using the cellulose composite pellets 330, the diaphragm 150 has a very high elastic modulus of 1800 MPa to 2100 MPa. Accordingly, even if a lower current flows through the voice coil part 140, an output (i.e., sound) higher than desired may be emitted. Therefore, in the embodiment, it is possible to realize high-quality sound and lower power consumption.

Meanwhile, since the diaphragm 150 of the embodiment is formed using the cellulose composite pellets 330, it is possible to proactively respond to climate change in an eco-friendly manner.

The components of the acoustic system 100 described above are only partial, and in reality, more components may be included.

### Industrial Applicability

An embodiment may be applied to an acoustic system.

In addition, an embodiment may be applied to various products, such as devices and equipment that utilize optical transparency and require environmental friendliness.

## Claims

1. A cellulose composite pellet comprising a transparent cellulose
material, a resin material, and an additive,
wherein the transparent cellulose material is 30 wt% to 70 wt%.

2. The cellulose composite pellet of claim 1, wherein the additive
comprises at least one of a light diffuser, a dispersant, or a pigment, the light diffuser is 0.3 wt% to 1.2 wt%, and
the dispersant is 0.1 wt% or less.

3. The cellulose composite pellet of claim 2, wherein the transparent cellulose material is obtained from an opaque cellulose powder.

4. A diaphragm injection-molded by using a cellulose composite pellet,
wherein the cellulose composite pellet comprises at least one of a transparent cellulose material, a resin material, a light diffuser, a dispersant, or a pigment, and
wherein the transparent cellulose material is 30 wt% to 70 wt%.

5. The diaphragm of claim 4, comprising:
a first region having a first diameter; and
a second region positioned on the first region and having a second diameter smaller than the first diameter,
wherein a height of the diaphragm is greater than the second diameter.

6. The diaphragm of claim 5, wherein the height of the diaphragm is 1 to 1.5 times greater than the second diameter.

7. The diaphragm of claim 5, wherein the first region has a conical shape, and the second region has a cylindrical shape.

8. The diaphragm of claim 5, wherein the first diameter decreases in an upper direction.

9. The diaphragm of claim 5, wherein a thickness of the second region is greater than a thickness of the first region.

10. The diaphragm of claim 9, wherein the thickness of the first region is 0.4 mm or less.

11. The diaphragm of claim 5, wherein the first region comprises:
an inner circumferential surface having a first surface roughness; and
an outer circumferential surface having a second surface roughness greater than the first surface roughness.

12. The diaphragm of claim 11, wherein the first surface roughness is 0.01 µm or less, and wherein the second surface roughness is 15 µm to 25 µm.

13. The diaphragm of claim 11, wherein a partial region of the inner circumferential surface corresponding to a predetermined height from a lowest side of the first region has a third surface roughness greater than the first surface roughness.

14. The diaphragm of claim 5, wherein an upper surface of the second region comprises a plurality of recesses disposed along a circumference thereof.

15. The diaphragm of claim 4, wherein the diaphragm has an elastic modulus of 1800 MPa to 2100 MPa.

16. The diaphragm of claim 4, wherein the diaphragm has a transmittance of 30% to 90%.

17. The diaphragm of claim 4, wherein the diaphragm radiates omnidirectional sound.

18. An acoustic system comprising:
the diaphragm of any one of claims 4 to 17;
a voice coil part coupled to a second region of the diaphragm; and
a magnetic field generating part on the voice coil part.

19. The acoustic system of claim 18, comprising:
a light source; and
a guide part disposed on the light source and passing through the diaphragm.
